(19) Europäisches Patentamt / European Patent Office / Office européen des brevets

(11) **EP 1 006 715 B1**

(12) **EUROPEAN PATENT SPECIFICATION**

(45) Date of publication and mention
of the grant of the patent:
**03.12.2008 Bulletin 2008/49**

(51) Int Cl.:
*H04N 1/64* (2006.01)     *H04N 1/41* (2006.01)

(21) Application number: **99309521.5**

(22) Date of filing: **29.11.1999**

(54) **Processing digital image data**

Verarbeitung digitaler Bilddaten

Traitement numérique de données d'image

(84) Designated Contracting States:
**DE FR GB**

(30) Priority: **02.12.1998 US 203870**
**07.12.1998 US 206487**
**07.12.1998 US 206488**
**21.12.1998 US 217138**
**22.12.1998 US 218643**

(43) Date of publication of application:
**07.06.2000 Bulletin 2000/23**

(73) Proprietor: **Xerox Corporation**
**Rochester,**
**New York 14644 (US)**

(72) Inventors:
• **Holladay, Thomas M.**
**Webster,**
**New York 14580 (US)**

• **Buckley, Robert R.**
**Rochester, NY 14625 (US)**
• **Klassen, R. Victor**
**Webster, NY 14580 (US)**
• **Zeck, Norman W.**
**Webster, NY 14580 (US)**
• **Crean, Peter A.**
**Penfield,**
**New York 14526 (US)**

(74) Representative: **Skone James, Robert Edmund**
**Gill Jennings & Every LLP**
**Broadgate House**
**7 Eldon Street**
**London EC2M 7LH (GB)**

(56) References cited:
**EP-A- 0 691 784     EP-A- 0 708 552**
**EP-A- 0 774 858     US-A- 5 778 092**

**Description**

This invention relates generally to image processing and, more particularly, to techniques for compressing the digital representation of a color document.

Documents scanned at high resolutions require very large amounts of storage space. Instead of being stored as such, the data is typically subjected to some form of data compression in order to reduce its volume, and thereby avoid the high costs associated with storing it. "Lossless" compression methods such as Lempel-Ziv (LZ) do not perform particularly well on scanned pixel maps. While "lossy" methods such as JPEG work fairly well on continuous-tone pixel maps, they do not work particularly well on the parts of the page containing text. To optimize image data compression, techniques, which can recognize the type of data being compressed, are needed.

US-A-5778092 describes a technique for compressing a colour or gray scale pixel map in which the map is decomposed into a three-plane representation consisting of foreground and background planes and a selector plane. The selector plane stores information for selecting from either of the foreground plane or background plane during decompression.

In accordance with one aspect of the present invention, a method of processing digital image data that is composed of multiple superimposed colourant separations comprises:

a) dividing the image data into colourant separations, wherein each colourant separation is composed of light intensity signals in discrete locations, each of said light intensity signals having a value which indicates a magnitude of a light intensity of the image data in said separation at said discrete location;

b) partitioning the light intensity signals of each colourant separation by creating a lossless signal plane and a lossy signal plane, according to whether each light intensity signal forms part of a short run of discrete locations and is best compressed by lossy compression or forms part of a long run of discrete locations and is best compressed by lossless compression respectively, said partitioning step including in stated order, the steps of:

i) selecting a number of consecutive discrete locations in said separation for which said signals have light intensity values that lie within a pre-determined range;

ii) calculating an average value for said selected light intensity values; and

b) generating a selector map which indicates, for each discrete location in each of said separations, whether light intensity signals previously located thereon have been placed on said lossless signal plane or on said lossy signal plane; and

c) for at least one separation, separately compressing said lossless signal planes and said lossy signal planes in a manner suited for compressing a type of data contained thereon, wherein said lossy signal plane is composed of a lossy subset of light intensity signals placed in discrete locations that correspond to discrete locations in which said lossy light intensity signals resided in said separation, and wherein signals that are present on said lossy signal plane in locations that correspond to discrete locations in which said lossless light intensity signals resided in said separation are ignored.

In accordance with another aspect of the present invention, an apparatus for processing digital image data that is composed of multiple superimposed colourant separations comprises:

a) means for dividing the image data into colourant separations, wherein each colourant separation is composed of light intensity signals in discrete locations, each of said light intensity signals having a value which indicates a magnitude of a light intensity of the image data in said separation at said discrete location;

b) means for partitioning the light intensity signals of each colourant separation into two planes by creating a lossless signal plane and a lossy signal plane;

c) means for generating a selector map which indicates, for each discrete location in each of said separations, whether light intensity signals previously located thereon have been placed on said lossless signal plane or on said lossy signal plane; and

d) for at least one separation, means for separately compressing said lossless signal plane and said lossy signal plane in a manner suited for compressing a type of data contained thereon, characterised in that the partitioning means partitions the light intensity signals according to whether each light intensity signal forms part of a short run of discrete locations and is best compressed by lossy compression or forms part of a long run of discrete locations and is best compressed by lossless compression respectively, in that the partitioning means is adapted further to carry out the following steps in the stated order:

i) selecting a number of consecutive discrete locations in said separation for which said signals have light intensity values that lie within a pre-determined range;

ii) calculating an average value for said selected light intensity values; and

iii) replacing signals in each of said consecutive discrete locations with said calculated average light intensity value;

and in that said lossy signal plane is composed of a lossy subset of light intensity signals placed in discrete locations that correspond to discrete locations in which said lossy light intensity signals resided in said separation, and wherein signals that are present on said lossy signal plane in locations that correspond to discrete locations in which said lossless light intensity signals resided in said separation are ignored.

The present invention is directed to segmenting and then compressing color image data, for example using the MRC format. The segmenting embodiments of the invention are directed to separating the original image data into two planes based upon the manner in which the data should subsequently be compressed. Compression embodiments are directed to compressing the data on the segmented planes using an appropriate technique. The compressed planes are then combined to produce the final output image. The compression technique will either have one selector plane for the entire image (image-wise segmentation), or one per separation (separation-wise segmentation).

In one embodiment of the invention, a method of compressing a pixel map representation of a document is disclosed, the method including the steps of: creating a first image plane from the pixel map representation of a document, the first image plane containing color signals for a first subset of image data in the document; creating a second image plane from the pixel map representation of the document, the second image plane containing image signals for a second subset of image data in the document; creating a selector plane from the pixel map representation of the document, wherein the selector plane selects between the first subset signals and the second subset signals when decompressing the compressed pixel map representation of the document; and pre-processing the first image plane and the second image plane based upon data contained in the selector map.

In another embodiment of the invention an apparatus for processing pixel map representations of documents is disclosed, including: means for creating a first image plane from the pixel map representation of a document, the first image plane containing color signals for a first subset of image data in the document; means for creating a second image plane from the pixel map representation of the document, the second image plane containing image signals for a second subset of image data in the document; means for creating a selector plane from the pixel map representation of the document, wherein the selector plane selects between the first subset signals and the second subset signals when decompressing the compressed pixel map representation of the document; and means for pre-processing the first image plane and the second image plane based upon data contained in the selector map.

In yet another embodiment of the invention, a program storage device tangibly embodying a program of instructions executable by a machine to perform method steps for compressing a document image is disclosed, wherein the method steps include: creating a first image plane from the pixel map representation of a document, the first image plane containing color signals for a first subset of image data in the document; creating a second image plane from the pixel map representation of the document, the second image plane containing image signals for a second subset of image data in the document; creating a selector plane from the pixel map representation of the document, wherein the selector plane selects between the first subset signals and the second subset signals when decompressing the compressed pixel map representation of the document; and pre-processing the first image plane and the second image plane based upon data contained in the selector map.

An example of a method and apparatus according to the invention will now be described with reference to the accompanying drawings, in which:

Figure 1 illustrates an example of the manner in which a composite image may be decomposed into three MRC image planes;

Figure 2 contains a schematic illustration of a document with multiple superimposed separations and the manner in which the separations may be individually represented;

Figure 3 depicts a single separation after image data thereon has been separated into two planes;

Figure 4 contains a flow chart with a general description of image processing according to an example of the present invention;

Figure 5 illustrates a pixel map and the way in which data may be separated based upon constraints of subsequent compression; and,

Figure 6 contains a detailed illustration of segmentation according to the present invention.

The present invention is directed to a method and apparatus for separately processing the various types of data contained in a composite image. While the invention will described in a Mixed Raster Content (MRC) technique, those skilled in the art will recognize that it may be adapted for use with other methods and apparatus' and the invention is therefore, not limited to this description. The technique described herein is suitable for use in various devices required for storing or transmitting color documents such as facsimile devices, image storage devices and the like. While processing of color documents is preferred, it should be noted that similar image processing concepts apply to grayscale black and white documents and as a result, those portions of the invention that are described with reference to color documents may be similarly applied to gray scale documents.

Color images are typically described as being divided into "separations." Color output devices such as printers and computer monitors typically output data using only a few independent color sources. Colorants or color signals obtained from these sources are then blended together in appropriate ways in order to produce the full gamut of colors that may be represented using the device. In a device dependent printer color space, Cyan, Magenta, Yellow and black are the individual colorants that are most often used in color printers. These colorant separations are typically labeled C, M, Y and K. Many device-independent color spaces also exist, such as CIE L*a*b*, in which the separations are Lightness, labeled L*, relative amount of red vs. green, labeled a*, and relative amount of yellow vs. blue, labeled b*.

A pixel map is one in which each discrete location on the page contains a picture element or "pixel" that emits a light signal with a value that indicates the color or, in the case of gray scale documents, how light or dark the image is at that location. As those skilled in the art will appreciate, most pixel maps have values that are taken from a set of discrete integers. For example, in a pixel map for a color document, individual separations are often represented as digital values, often in the range 0 to 255, where 0 represents no colorant (i.e. when CMYK separations are used), or the lowest value in the range when luminance-chrominance separations are used.

In an L*a*b* luminance-chrominance color space a 0 L* value means that no light is present (i.e. the location is completely black), while a* =0 means no red or green is present and b* =0 means that the spot is neither blue nor yellow. Both a*=0 and b*=0 means that the spot is gray, (somewhere between black and white). When represented in an integer space, L*, a*, and b* are typically scaled and translated to fit the range of representable values. In this case a*=b* = 0 is actually represented with these values at the midpoint of their ranges, while a*=0 is used to represent green, and b*=0 is used to represent blue.

Consequently 255 represents the maximum amount of colorant (for CMYK) or the highest value in the range (maximum light/white, red and yellow respectively for L*a*b*). In a gray-scale pixel map this typically translates to pixel values which range from 0, for black, to 255, for the whitest tone possible. The pixel maps of concern in the currently preferred embodiment of the present invention are representations of rasterized or "RIPped" images. That is, images which are created using a Raster Image Processor (RIP) to convert an electronic document, typically represented by a page description language such as PostScript, into a raster image. The present invention may also apply to representations of "scanned" images - images that are created by digitizing light reflected off of physical media using a digital scanner. The term bitmap is used to mean a binary pixel map in which pixels can take one of two values, 1 or 0.

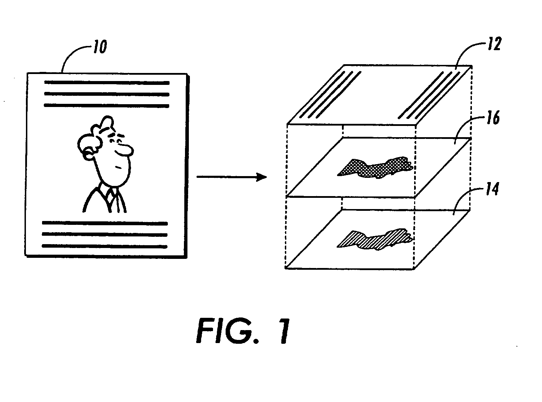

Turning now to the drawings for a more detailed description of the MRC format, pixel map 10 representing a color or gray-scale document is preferably decomposed into a three plane page format as indicated in Figure 1. The document format is typically comprised of an upper plane 12, a lower plane 14, and a selector plane 16. Upper plane 12 and lower plane 14 contain pixels that describe the original image data. Pixels in the original image are separated based upon pre-defined criteria such that some of them are placed on upper plane 12 and the rest on lower plane 14. Selector plane 16 keeps track of every pixel in original pixel map 10 and maps all pixels to an exact spot on either upper plane 12 or lower plane 14.

The upper and lower planes are typically stored at the same bit depth and number of colors as the original pixel map 10, but possibly at reduced resolution. Selector plane 16 is created and stored as a bitmap. It is important to recognize that while the terms "upper" and "lower" are used to describe the planes on which data resides, it is not intended to limit the invention to any particular arrangement or configuration. Further, it is also possible to practice the invention with a configuration that results in both planes being placed such that neither is actually on the top or bottom (i.e. side by side).

After processing, all three planes are compressed using a method suitable for the type of data residing therein. For example, upper plane 12 and lower plane 14 may be compressed and stored using a lossy compression technique such as JPEG or a lossless compression technique such as Lempel-Ziv (i.e. gzip) or CCITT-G4. Selector plane 16 may be compressed and stored using a lossless compression format. It would be apparent to one of skill in the art to compress and store the planes using other formats that are suitable for the intended use of the color document. For example, in the Color Facsimile arena, group 4 (MMR) would preferably be used for selector plane 16, since the particular compression format used must be one of the approved formats (MMR, MR, MH, JPEG, JBIG, etc.) for facsimile data transmission.

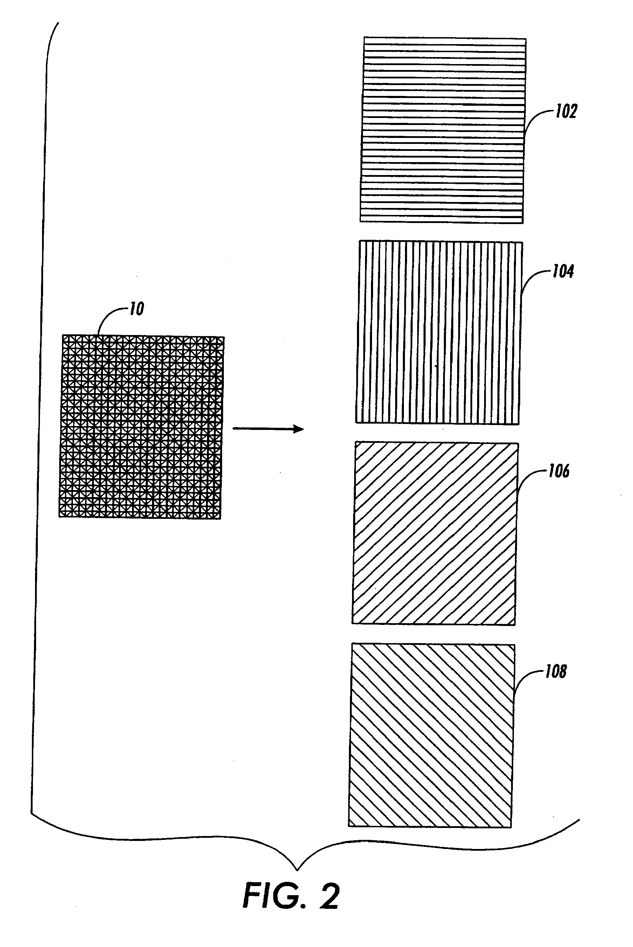

Turning now to Figure 2, in the present invention digital image data is processed during a MRC technique such as described above. A color pixel map 10 is composed of multiple superimposed separations, where each individual separation distributes spectral power for a different wavelength range of light in the digital image. In one embodiment of the invention, these individual separations supply cyan 102, magenta 104, yellow 106 and black 108 colorants in a hardcopy output printing device. While the invention will hereinafter be described with reference to a scheme in which a printer provides these four colorants, those skilled in the art will recognize that other embodiments are possible. For example in another embodiment, individual separations emit red, green and blue colored light signals from phosphors in a video monitor. In still another embodiment, colorants are supplied in a hardcopy output printing device in a manner that is dependent upon signals that represent luminance and relative amounts of red vs. green and yellow vs. blue. Further, while the invention is described here using four colorant separations, those skilled in the art will recognize that the number of separations in which pixel map 10 will be divided may be varied, depending upon the constraints of the device. It is intended to embrace all such alternatives and others that would be recognized as equivalent or easily adaptable by those of ordinary skill in the art.

The present invention first requires dividing the superimposed separations into individual colorant separations 102, 104, 106 and 108. For purposes of illustration, horizontal, vertical, and diagonal lines represent the wavelength ranges (colors) for each separation. Since pixel map 10 preferably represents a scanned image, the image, and therefore each separation 102-108 contained therein, is composed of light intensity signals dispersed throughout the separation at discrete locations. Again, a light signal is emitted from each of these discrete locations, referred to as "picture elements," "pixels" or "pels," at an intensity level which indicates the magnitude of the light that being reflected from the original image at the corresponding location in that separation.

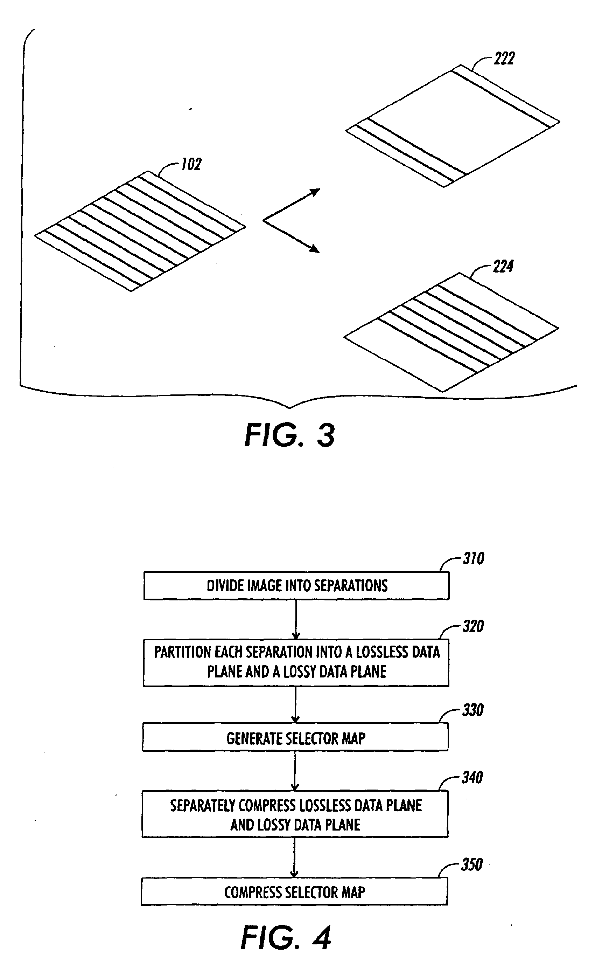

Referring now to Figure 3, the invention will hereinafter be described with reference to processing cyan colorant separation 102. The process is identical for separations 104-108, and the description applies to those separations as well. In typical MRC fashion, separation 102 is partitioned into two planes. In the present invention, the criteria for deciding on which plane a pixel will be placed is the manner in which the pixel will best be compressed. Thus, separation 102 is divided into two planes-one lossless 222 and one lossy 224. More specifically, pixels in each separation are classified as either "lossy" or "lossless," based upon the type of compression that should be applied. Those signals that for a given level of quality will compress at a higher compression ratio losslessly are referred to as "lossless", while the remaining pixels are referred to as "lossy".

Generally speaking, lossy compression is a process that substantially reduces the volume of remaining data. Because of its ability to reduce data, it is desirable to apply a lossy compression technique whenever possible. Unfortunately producing such large amounts of data reduction also means that large amounts of imaging information will be lost. This often means that imaging accuracy will be significantly reduced. Pictorial data is one type of data that typically survives lossy compression well.

Text and large areas of a page covered with signals at a single light intensity are types of data that typically compress better losslessly. Areas containing strong edges - sharp discontinuities between regions of two constant colors-require very low compression ratios to provide acceptable image quality when compressed lossily. Areas containing only constant colors - no edges whatsoever - or only smooth gradations, compress very well using either technique, providing maximal compression ratios with no artifacts. The highest achievable compression ratios with lossless compression are generally higher than with lossy techniques, so in order to exploit the high compression available in these regions, lossless compression is preferred.

Lossy signal plane 222 is the location designated for pixels that have been classified as lossy. The remaining pixels are designated for lossless signal plane 224. Looking at separation 102, in other words lossy plane 222 will contain pixels for which it has been determined that lossy compression would be acceptable and desirable. The remaining pixels will be placed on lossless plane 224. Pixels that are placed on lossy plane 222 are placed in a location on plane 222 that directly corresponds to that in which they resided in separation 102. The remaining pixels are then placed on plane 224 in sequential order moving from right to left and from top to bottom.

Figure 4 contains a flow chart indicating the sequential order of the steps that are followed in one embodiment of the invention. The process begins by dividing original pixel map 10 into it individual separations 102 - 108, as indicated in step 310. Each separation is then partitioned into two planes as shown in step 320. As described above, these two planes are a plane 222 that will contain the pixels that are best compressed losslessly and a plane 224 that contains pixels that should be compressed lossily. A selector plane 16 is also generated as indicated in step 330, to keep track of the location of each pixel as original plane map 10 is partitioned. The planes are then compressed independently as indicated in steps 340 and 350.

The steps of Figure 4 will usually be performed by a suitably programmed computer although corresponding hardware embodiments will be readily envisaged by a person of ordinary skill in the art.

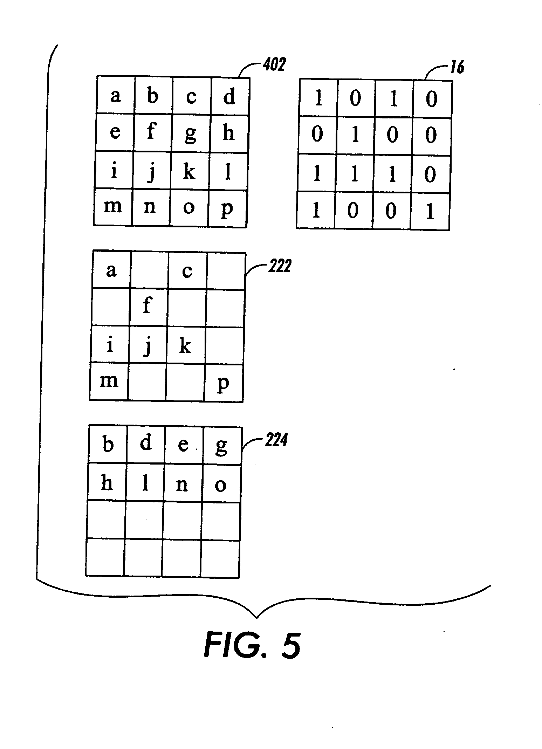

Turning now to Figure 5, assume that the contents of original pixel map 10 are as shown in block 402, and that image data indicated by characters a, c, f, i, j, k, m and p will adequately survive lossy compression. Under these circumstances, that data will be placed in lossy plane map 222 as shown in the illustration. The remaining characters b, d, e, g, h, l, n and o are then placed on plane 224.

Still referring to Figure 5, partitioning of separation 102 is performed by generating a selector plane 16 which maps, for each location in the separation, whether the pixel residing there has been placed on lossy plane 222 or on lossless plane 224. Binary values are placed on selector plane 16 to provide this indication. As shown, 0's are placed in selector plane 16 in locations where pixels have been designated for lossless plane 224, while 1's are in the locations where signals have been placed on lossy plane 222. Once the planes have been created, they are compressed using an appropriate lossy or lossless compression technique. In the preferred embodiment of the invention, JPEG's ADCT compression will be applied to lossy plane 222, while freeware "gzip" will be applied to lossless plane 224. See G. Wallace "The JPEG still picture compression standard", Communications of the ACM 34 (4), pp.30-44, April 1991, the contents of which are hereby incorporated by reference, for a discussion of Adaptive Discrete Cosine Transform compression, also known as JPEG.

It should be noted that an indication of the type of data in a section of the image could be obtained by determining the number of consecutive pixels that have the same light intensity value. Short pixel runs - few consecutive pixels with the same light intensity - typically indicate that pictorial data is being processed. As stated earlier, pictorial data survives well when subjected to lossy compression. Thus, when only a few consecutive pixels have the same value or if the light intensity value is constantly changing, the pixels being processed are designated for lossy plane 222. This obviously means that long pixel runs - several consecutive pixels with the same light intensity value - remain and will be placed on lossless plane 224. Again, this is generally acceptable because long pixel runs generally compress well when compressed losslessly.

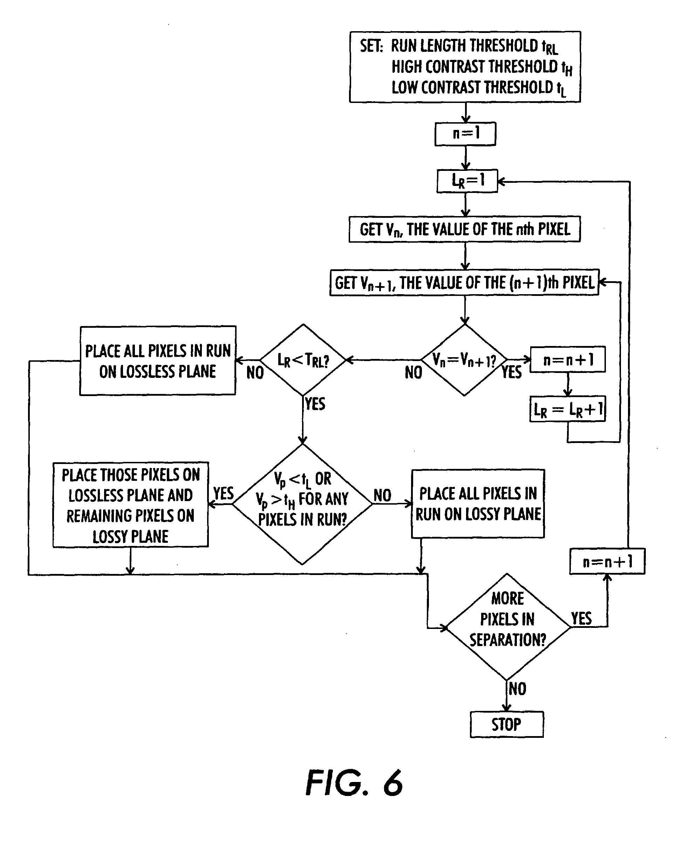

Referring now to Figure 6, a detailed description of the segmentation portion of the present invention will now be provided. First, the number of consecutive pixels within the separation for which the light intensity values are equal must be determined. Here it is sufficient that the light intensity values be nearly equal, that is equal to within some predetermined precision. It is known that high contrast data - data that has a light intensity value above a certain high threshold or below a certain low threshold - tends to exhibit artifacts when it is subjected to lossy compression (except in large regions of constant high or low value, where as previously indicated already indicated, lossless compression provides a higher compression ratio). When a short run has been identified the pixels in the run are designated in selector plane 16 as lossy pixels to be placed on lossy plane 222 as long as they are not high or low contrast pixels. The remaining pixels - high or low contrast or part of a long run - are classified as lossless pixels to be placed on lossless plane 224.

In the invention, data that is nearly constant for a run is modified so that the entire run is changed to the average value, and then compressed losslessly. In this way, scanned data of a constant value has scanning noise removed before the decision is made whether to compress lossily or losslessly. In long runs of data in which the light intensity values are slowly increasing or decreasing, similar smoothing may be performed, but only in such a way as to preserve the gradual increase or decrease in values.

As indicated in the illustration, pixels in the lossless plane are not arranged in the same manner as those in lossy plane 222. Pixels in lossless plane 224 are deposited onto the plane in serial fashion such that they are processed in the same order that they would be if they remained on separation plane 102.

A long pixel run is typically one that has at least somewhere between four and eight pixels in a row with the same light intensity value. In one embodiment of the invention, the Cyan separation of an image produced using color xerographic toner particles was compressed using a run length of 6 pixels, a high contrast value of 255 and a low contrast value of 0. These parameters resulted in a compression ratio of 10 to 1. Run length and contrast parameters can be varied in order to influence the amount of data that will be sent to lossy plane 222 instead of lossless plane 224.

Once segmentation has been completed, selector plane 16 is used to compress the data on both lossy plane 222 and lossless plane 224. Looking first at lossy plane 222, lossy data is typically block oriented. Generally speaking, lossy compression is performed by processing data in blocks-entire groups of pixels are processed simultaneously. Empty spaces on plane 222, which correspond to locations where pixels have not been retained, may be replaced by any value before compression occurs. The present invention takes advantage of the fact that non-retained values are not needed after compression by filling these spaces with pixel values that will result in high lossy compression efficiency.

Turning back to Figure 5, in one embodiment of the invention, spaces on lossy plane 222 are filled in with pixel values that are equal to the previous neighbor in raster-scan order sequence. In another embodiment of the invention, these spaces are filled in by interpolating the pixels that were originally located in pixel map 10 in spots that correspond to the blank spaces using the DCT interpolation kernel. That is, each blank space is replaced with a pixel that has a value predicted by a DCT based interpolant. The lossy pixels in the block are fit with a number of terms in the expansion of the discrete cosine transform, the number being up to but not greater than the number of lossy pixels remaining. Given these terms, the interpolant is evaluated at the locations corresponding to the missing pixels. In this way, no new information is introduced into the block, which must be subsequently encoded using the DCT transform.

When the final image is reconstructed (as part of decompression), the image will be formed using the inverse discrete cosine transform (assuming JPEG compression). That is, the pixel at location (x, y) in the block will be computed as

$$\frac{1}{4}\left[\sum_{u=0}^{7}\sum_{v=0}^{7}C(u)C(v)F(u,v)\times\cos(\tfrac{(2x+1)u\pi}{16})\cos(\tfrac{(2y+1)v\pi}{16})\right] ,$$

where $C(0) = 1/\sqrt{2}$, $C(\xi > 0) = 1$, and $F(u,v)$ represents the transformed value at location (u,v). Each product

$$B_{u,v}(x,y) = C(u)C(v)\cos(\tfrac{(2x+1)u\pi}{16})\cos(\tfrac{(2y+1)v\pi}{16})$$ is a single basis function, and the pixel is constructed as a sum of scaled basis functions, where the scales are given by the transformed values. In a block with no "missing" pixels, the transformed values are uniquely specified as the only values which when inverse transformed, will give the original values. These are readily computed using the forward discrete cosine transform, which is similar in form to the inverse discrete cosine transform. In a block with missing pixels, the 64 transformed values to be multiplied by the basis functions represent more degrees of freedom than there are constraints. Specifically, if even one value is missing, there are infinitely many possible combinations of transformed values that will, when inverse transformed, give the correct values at the remaining pixels, while each combination will give a different value at the missing pixel.

In large part JPEG compression derives its high compression ratio from the presence of small, insignificant values in the transformed block. In particular, high frequency values (i.e. values at locations for which u+v is large) are quantized in such a way that if they are small to begin with, they become 0 (this is the main origin of the loss in this form of lossy compression). One may think of the missing pixels as extra degrees of freedom, or one may think in terms of the extra degrees of freedom as being coefficients in the transformed domain. To improve compression, the objective is to use those extra degrees of freedom to maximize the compression ratio. This is achieved by arranging to have any extra transformed values 0.

Given that JPEG provides the best compression if the high frequency terms are zero, and that if there are n pixels remaining in a block, there are only n frequency terms fully specified, the question is which n frequency terms should be used. One convenient choice is to use every basis function in order of increasing u+v, and where multiple values of u,v give the same u+v, use increasing v for odd u+v, and increasing u for even u+v (this is the well-known zig-zag order in the JPEG standard).

Given a set of basis functions, B = {$B_{u,v}$ (x,y), (u,v) $\in$ S}, for some set S of pairs (u,v), the problem is to find a set of weights, which when used to form a weighted sum of the basis functions, will give values for the pixels that remain on the plane. Then the missing pixels will be computed by substituting their locations into the same weighted sums. In this way when the transform is computed during the actual compression step, high order terms will be zero, and low order terms will, upon being inverse transformed, yield the original, values for the pixels that remain on the plane. The missing values will be wrong, but they will subsequently be replaced by values from the lossless channel.

To solve the problem of finding the set of weights, note that the locations of the remaining pixels forms a set P of ordered pairs (x,y). Now number the elements of P in any convenient order, so that an element of P is simply $p_i$. Similarly number the ordered pairs in S, so that an element of S is $s_j$. If the basis functions corresponding to elements of S are evaluated at locations corresponding to elements of P, and indexed accordingly, then the value at point $p_i$ is given by:

$$\sum_j B_{u,v}(x,y)F(u,v) = \sum_j B_{s_j}(p_i)F(s_j) = \sum_j B_{ij}F_j$$

Numbering the original "non-missing" pixels according to the index of their location, we have the constraint

$$f_i = \sum_j B_{ij}F_j \text{ or } \mathbf{f} = \mathbf{BF} \ ,$$ with **f**, **F** vectors and **B** a matrix. This is a standard form, which may be solved exactly if the number of non-missing pixels is the same as the number of basis functions, or using standard least squares techniques otherwise.

One special case is worthy of note; if only the lowest order basis function is used in the least-squares solution, the solution will guarantee that the DC term is the same as the average of the non-missing pixels. A more efficient way of achieving the same end is to simply set all of the missing pixels to the average of the remaining pixels.

With continued reference to Figure 5, the values retained for lossy plane 222 are those which were marked with 1's on selector plane 16. As shown in the illustration, pixels must be placed in the lossy plane in locations that directly correspond to locations in which they were located on original pixel map 10. This leaves empty spaces distributed throughout lossy plane 222 in the places that are marked by 0's on selector plane 16. The 0 values in selector plane 16 are useless as far as compression of lossy plane 222 is concerned since the losslessly compressed pixels on plane 224 will actually be placed in the final output image. As a result, these empty spaces can be filled with values that will best facilitate the lossy compression that will subsequently be applied.

Still referring to Figure 5, processing of lossless plane 224 is similar in that values that have been marked with 0's are retained, since those are the ones designated as lossless pixels in selector plane 16. But unlike lossy data, lossless compression is generally performed on a pixel by pixel basis. Depending upon the constraints of the lossless compression method, the empty spaces on lossless plane 224 can also be filled with pixels that will enable maximum compression efficiency. In some cases, the empty spaces can simply be deleted. While lossless plane 224 is described as a "plane," it can actually be viewed as a continuous string of data.

In one embodiment of the invention, these empty spaces will be replaced with pixel values that are equal to the previous neighbor in the ordinary raster-scan order sequence. In another embodiment of the invention, each empty space will be filled with a pixel value equal to the most common pixel value that has been processed before it. If the empty spaces are deleted, their locations will be determined using selector plane 16. This means that pixels on lossless plane 224 do not have to be placed in locations that are in direct physical correspondence with those in original pixel map 10. The only criteria for locations in which pixels must be placed on lossless plane 224 is that they must be ordered such that they can be selected using selector plane 16 when necessary. Spaces filled on lossless plane 224 can be filled in with pixels that have values that have been manipulated or altered in the manner that will be most helpful during lossless compression.

As described above, segmentation and compression are performed separation by separation. In another embodiment of the invention, segmentation and compression may be performed on all separations of the entire image. Under these circumstances, the criteria for distinguishing long pixel runs from short pixel runs involve all separations together. All separations must be constant for some number of pixels in a row for a run to be long. In addition, whether a pixel is "high contrast" or "low contrast" requires that all separations satisfy the same rule. Other than these requirements, the steps in performing the method remain as described above. In the case of L*a*b* or a similar -luminance-chrominance based color space, it is also possible to perform the segmentation based on only the L* (lightness) separation, and allow the a* and b* separations to be segmented in whatever way the L* dictates. Any errors caused by this approximation will come in the form of a* and b* data that is erroneously compressed lossily, which is unlikely to be seen, due to the eye's poor response to chromatic edges. Chrominance data that is losslessly compressed because of this approximation will not exhibit any errors, it will only not compress with quite as high a compression ration.

Turning back to Figure 2, once each of the respective planes is generated, they are each compressed using a suitable compression technique. In the currently preferred embodiment, lower plane 14 and lower plane 14 are compressed using JPEG while the selector plane 16 is compressed using a two-dimensional technique such as CCITT Group IV or a method of classifying scanned symbols into equivalence classes such as that described in US-A 5,778,095 to Davies issued July 7, 1998, the contents of which are hereby incorporated by reference.

In summary, the present invention uses the selector plane to replace, for each plane, pixels that have been designated to be provided by the other plane by carefully chosen values. The previously existing data is completely ignored, and the newly chosen values are calculated for such that the number of bits that will be generated during the subsequent compression is minimized.

## Claims

1. A method of processing digital image data that is composed of multiple superimposed colourant separations, comprising:

    a) dividing the image data into colourant separations (102-108), wherein each colourant separation is composed of light intensity signals in discrete locations, each of said light intensity signals having a value which indicates a magnitude of a light intensity of the image data in said separation at said discrete location;

    b) partitioning the light intensity signals of each colourant separation by creating a lossless signal plane and a lossy signal plane (12, 14), according to whether each light intensity signal forms part of a short run of discrete locations and is best compressed by lossy compression or forms part of a long run of discrete locations and is best compressed by lossless compression respectively, said partitioning step including in stated order, the steps of:

        i) selecting a number of consecutive discrete locations in said separation for which said signals have light intensity values that lie within a pre-determined range;

        ii) calculating an average value for said selected light intensity values; and

        iii) replacing signals in each of said consecutive discrete locations with said calculated average light intensity value;

    c) generating a selector map (16) which indicates, for each discrete location in each of said separations, whether light intensity signals previously located thereon have been placed on said lossless signal plane or on said lossy signal plane; and

    d) for at least one separation, separately compressing said lossless signal planes and said lossy signal planes in a manner suited for compressing a type of data contained thereon, wherein said lossy signal plane is composed of a lossy subset of light intensity signals placed in discrete locations that correspond to discrete locations in which said lossy light intensity signals resided in said separation, and wherein signals that are present on said lossy signal plane in locations that correspond to discrete locations in which said lossless light intensity signals resided in said separation are ignored.

**2.** A method of processing an image as claimed in claim 1, wherein for at least one separation, said partitioning step further comprises:

  i) selecting a number of consecutive discrete locations in said separation for which said signals have equal light intensity magnitudes;
  ii) designating said signals for said lossy subset when said counted number of consecutive signals is less than a pre-determined value; and
  iii) placing signals not designated for said lossy subset in said lossless subset.

**3.** A method of processing an image as claimed in claim 1, wherein for at least one separation, said partitioning step further comprises:

  i) placing signals not included in said lossy subset in said lossless subset; and
  ii) for signals designated for said lossy subset, selecting signals that have values that are either greater than a high threshold value or less than a low threshold value, and moving said selected signals from said lossy subset to said lossless subset.

**4.** An apparatus for processing digital image data that is composed of multiple superimposed colourant separations, comprising:

  a) means for dividing the image data into colourant separations (102-108), wherein each colourant separation is composed of light intensity signals in discrete locations, each of said light intensity signals having a value which indicates a magnitude of a light intensity of the image data in said separation at said discrete location;
  b) means for partitioning the light intensity signals of each colourant separation into two planes (12,14) by creating a lossless signal plane and a lossy signal plane (12,14) ;
  c) means for generating a selector map (16) which indicates, for each discrete location in each of said separations, whether light intensity signals previously located thereon have been placed on said lossless signal plane or on said lossy signal plane; and
  d) for at least one separation, means for separately compressing said lossless signal plane and said lossy signal plane in a manner suited for compressing a type of data contained thereon, **characterised in that** the partitioning means partitions the light intensity signals according to whether each light intensity signal forms part of a short run of discrete locations and is best compressed by lossy compression or forms part of a long run of discrete locations and is best compressed by lossyless compression respectively, **in that** the partitioning means is adapted further to carry out the following steps in the stated order:

  i) selecting a number of consecutive discrete locations in said separation for which said signals have light intensity values that lie within a pre-determined range;
  ii) calculating an average value for said selected light intensity values; and
  iii) replacing signals in each of said consecutive discrete locations with said calculated average light intensity value;
  and **in that** said lossy signal plane is composed of a lossy subset of light intensity signals placed in discrete locations that correspond to discrete locations in which said lossy light intensity signals resided in said separation, and wherein signals that are present on said lossy signal plane in locations that correspond to discrete locations in which said lossless light intensity signals resided in said separation are ignored.

**5.** A programmable storage device readable by a machine, and embodying a program of instructions defining method steps for processing digital image data that is composed of multiple superimposed separations, the method steps comprising:

  a) dividing the image data into colourant separations (102-108), wherein each colourant separation is composed of light intensity signals in discrete locations, each of said light intensity signals having a value which indicates a magnitude of a light intensity of the image data in said separation at said discrete location;
  b) partitioning the light intensity signals of each colourant separation by creating a lossless signal plane and a lossy signal plane (12, 14), according to whether each light intensity signal forms part of a short run of discrete locations and is best compressed by lossy compression or forms part of a long run of discrete locations and is best compressed by lossless compression respectively, said partitioning step including in state order, the steps of:

i) selecting a number of consecutive discrete locations in said separation for which said signals have light intensity values that lie within a pre-determined range;
ii) calculating an average value for said selected light intensity values; and
iii) replacing signals in each of said consecutive discrete locations with said calculated average light intensity value;

c) generating a selector map (16) which indicates, for each discrete location in each of said separations, whether light intensity signals previously located thereon have been placed on said lossless signal plane or on said lossy signal plane; and

d) for at least one separation, separately compressing said lossless signal planes and said lossy signal planes in a manner suited for compressing a type of data contained thereon, wherein said lossy signal plane is composed of a lossy subset of light intensity signals placed in discrete locations that correspond to discrete locations in which said lossy light intensity signals resided in said separation, and wherein signals that are present on said lossy signal plane in locations that correspond to discrete locations in which said lossless light intensity signals resided in said separation are ignored.

**Patentansprüche**

1. Verfahren zum Verarbeiten digitaler Bilddaten, die aus mehreren übereinandergelegten Farbauszügen zusammengesetzt sind, wobei es umfasst:

a) Teilen der Bilddaten in Farbauszüge (102-108), wobei jeder Farbauszug aus Lichtintensitätssignalen an diskreten Positionen zusammengesetzt ist und jedes der Lichtintensitätssignale einen Wert hat, der einen Betrag einer Lichtintensität der Bilddaten in dem Auszug an der diskreten Position anzeigt;
b) Untergliedern der Lichtintensitätssignale jedes Farbauszugs durch Erzeugen einer verlustlosen Signalebene und einer verlustbehafteten Signalebene (12, 14) in Abhängigkeit davon, ob jedes Lichtintensitätssignal einen Teil einer kurzen Reihe diskreter Positionen bildet und am besten mittels verlustbehafteter Kompression komprimiert wird, oder einen Teil einer langen Reihe diskreter Positionen bildet und am besten mittels verlustloser Kompression komprimiert wird, wobei der Schritt des Untergliederns in festgelegter Reihenfolge die folgenden Schritte einschließt:

I) Auswählen einer Anzahl aufeinanderfolgender diskreter Positionen in dem Auszug, für die die Signale Lichtintensitätswerte haben, die innerhalb eines vorgegebenen Bereiches liegen;
11) Berechnen eines durchschnittlichen Wertes für die ausgewählten Lichtintensitätswerte; und
III) Ersetzen von Signalen an jeder der aufeinanderfolgenden diskreten Positionen durch den berechneten durchschnittlichen Lichtintensitätswert;

c) Erzeugen eines Selektor-Kennfeldes (selector map) (16), das für jede diskrete Position in jedem der Auszüge anzeigt, ob zuvor darin befindliche Lichtintensitätssignale auf der verlustlosen Signalebene oder auf der verlustbehafteten Signalebene angeordnet worden sind; und
d) für wenigstens einen Auszug separates Komprimieren der verlustlosen Signalebenen und der verlustbehafteten Signalebenen auf eine Weise, die zum Komprimieren eines darin enthaltenen Typs von Daten geeignet ist, wobei die verlustbehaftete Signalebene aus einer verlustbehafteten Teilgruppe von Lichtintensitätssignalen zusammengesetzt ist, die an diskreten Positionen angeordnet sind, die diskreten Positionen entsprechen, an denen die verlustbehafteten Lichtintensitätssignale in dem Auszug resident waren, und wobei Signale, die auf der verlustbehafteten Signalebene an Positionen vorhanden sind, die diskreten Positionen entsprechen, an denen die verlustlosen Lichtintensitätssignale in dem Auszug resident waren, ignoriert werden.

2. Verfahren zum Verarbeiten eines Bildes nach Anspruch 1, wobei für wenigstens einen Auszug der Schritt des Untergliederns des Weiteren umfasst:

I) Auswählen einer Anzahl aufeinanderfolgender diskreter Positionen in dem Auszug, für die die Signale gleiche Betrage der Lichtintensität haben;

II) Bestimmen der Signale für die verlustbehaftete Teilgruppe, wenn die gezählte Anzahl aufeinanderfolgender Signale geringer ist als ein vorgegebener Wert; und

III) Anordnen der nicht für die verlustbehaftete Teilgruppe bestimmten Signale in der verlustlosen Teilgruppe.

**3.** Verfahren zum Verarbeiten eines Bildes nach Anspruch 1, wobei für wenigstens einen Auszug der Schritt des Untergliederns des Weiteren umfasst:

I) Anordnen von Signalen, die nicht in der verlustbehafteten Teilgruppe enthalten sind, in der verlustlosen Teilgruppe;

II) für Signale, die für die verlustbehaftete Teilgruppe bestimmt sind, Auswählen von Signalen, die Werte haben, die entweder über einem hohen Schwellenwert liegen oder unter einem niedrigen Schwellenwert liegen, und Verschieben der ausgewählten Signale von der verlustbehafteten Teilgruppe zu der verlustlosen Teilgruppe.

**4.** Vorrichtung zum Verarbeiten digitaler Bilddaten, die aus mehreren übereinandergelegten Farbauszügen bestehen, wobei sie umfasst:

a) eine Einrichtung zum Teilen der Bilddaten in Farbauszüge (102-108), wobei jeder Farbauszug aus Lichtintensitätssignalen an diskreten Positionen zusammengesetzt ist und jedes der Lichtintensitätssignale einen Wert hat, der einen Betrag einer Lichtintensität der Bilddaten in dem Auszug an der diskreten Position anzeigt;

b) eine Einrichtung zum Untergliedem der Lichtintensitätssignale jedes Farbauszugs in zwei Ebenen (12, 14) durch Erzeugen einer verlustlosen Signalebene und einer verlustbehafteten Signalebene (12, 14);

c) eine Einrichtung zum Erzeugen eines Selektor-Kennfeldes (selector map) (16), das für jede diskrete Position in jedem der Auszüge anzeigt, ob zuvor darin befindliche Lichtintensitätssignale auf der verlustlosen Signalebene oder auf der verlustbehafteten Signalebene angeordnet worden sind; und

d) für wenigstens einen Auszug eine Einrichtung zum separaten Komprimieren der verlustlosen Signalebene und der verlustbehafteten Signalebene auf eine Weise, die zum Komprimieren eines darin enthaltenen Typs von Daten geeignet ist, **dadurch gekennzeichnet, dass** die Untergliederungseinrichtung die Lichtintensitätssignale in Abhängigkeit davon untergliedert, ob jedes Lichtintensitätssignal einen Teil einer kurzen Reihe diskreter Positionen bildet und am besten mittels verlustbehafteter Kompression komprimiert wird, oder einen Teil einer langen Reihe diskreter Positionen bildet und am besten mittels verlustloser Kompression komprimiert wird, und **dadurch**, dass die Untergliederungseinrichtung des Weiteren so eingerichtet ist, dass sie die folgenden Schritte in der festgelegten Reihenfolge ausführt:

I) Auswählen einer Anzahl aufeinanderfolgender diskreter Positionen in dem Farbauszug, für die die Signale Lichtintensitätswerte haben, die innerhalb eines vorgegebenen Bereiches liegen;

II) Berechnen eines durchschnittlichen Wertes für die ausgewählten Lichtintensitätswerte; und

III) Ersetzen von Signalen an jeder der aufeinanderfolgenden diskreten Positionen durch den berechneten durchschnittlichen Lichtintensitätswert;

und **dadurch**, dass die verlustbehaftete Signalebene aus einer verlustbehafteten Teilgruppe von Lichtintensitätssignalen zusammengesetzt ist, die an diskreten Positionen angeordnet sind, die diskreten Positionen entsprechen, an denen die verlustbehafteten Lichtintensitätssignale in dem Auszug resident waren, und wobei Signale, die auf der verlustbehafteten Signalebene an Positionen vorhanden sind, die diskreten Positionen entsprechen, an denen die verlustlosen Lichtintensitätssignale in dem Auszug resident waren, ignoriert werden.

**5.** Programmierbare Speichervorrichtung, die von einer Maschine gelesen werden kann und ein Programm aus Befehlen verkörpert, die Verfahrensschritte zum Verarbeiten digitaler Bilddaten definieren, die aus mehreren übereinandergelegten Auszügen zusammengesetzt sind, wobei die Verfahrensschritte umfassen:

a) Teilen der Bilddaten in Farbauszüge (102-108), wobei jeder Farbauszug aus Lichtintensitätssignalen an diskreten Positionen zusammengesetzt ist und jedes der Lichtintensitätssignale einen Wert hat, der einen Betrag einer Lichtintensität der Bilddaten in dem Auszug an der diskreten Position anzeigt;

b) Untergliedern der Lichtintensitätssignale jedes Farbauszugs durch Erzeugen einer verlustlosen Signalebene und einer verlustbehafteten Signalebene (12, 14) in Abhängigkeit davon, ob jedes Lichtintensitätssignal einen Teil einer kurzen Reihe diskreter Positionen bildet und am besten mittels verlustbehafteter Kompression komprimiert wird, oder einen Teil einer langen Reihe diskreter Positionen bildet und am besten mittels verlustloser Kompression komprimiert wird, wobei der Schritt der Untergliederns in festgelegter Reihenfolge die folgenden Schritte einschließt:

I) Auswählen einer Anzahl aufeinanderfolgender diskreter Positionen in dem Auszug, für die die Signale Lichtintensitätswerte haben, die innerhalb eines vorgegebenen Bereiches liegen;
II) Berechnen eines durchschnittlichen Wertes für die ausgewählten Lichtintensitätswerte; und
III) Ersetzen von Signalen an jeder der aufeinanderfolgenden diskreten Positionen durch den berechneten durchschnittlichen Lichtintensitätswert;

c) Erzeugen eines Selektor-Kennfeldes (selector map) (16), das für jede diskrete Position in jedem der Auszüge anzeigt, ob zuvor darin befindliche Lichtintensitätssignale auf der verlustlosen Signalebene oder auf der verlustbehafteten Signalebene angeordnet worden sind; und
d) für wenigstens einen Auszug separates Komprimieren der verlustlosen Signalebenen und der verlustbehafteten Signalebenen auf eine Weise, die zum Komprimieren eines darin enthaltenen Typs von Daten geeignet ist, wobei die verlustbehaftete Signalebene aus einer verlustbehafteten Teilgruppe von Lichtintensitätswerten zusammengesetzt ist, die an diskreten Positionen angeordnet sind, die diskreten Positionen entsprechen, an denen die verlustbehafteten Lichtintensitätssignale in dem Auszug resident waren, und wobei Signale, die auf der verlustbehafteten Signalebene an Positionen vorhanden sind, die diskreten Positionen entsprechen, an denen die verlustbehafteten Lichtintensitätssignale in dem Auszug resident waren, ignoriert werden.

## Revendications

1. Procédé de traitement de données d'images numériques qui sont composées d'une pluralité de séparations de matières colorantes superposées, comprenant le fait de:

   a) diviser les données d'images en des séparations de matières colorantes (102-108), où chaque séparation de matière colorante est composée de signaux d'intensité de lumière dans des emplacements discrets, chacun desdits signaux d'intensité de lumière ayant une valeur qui indique une amplitude d'une intensité de lumière des données d'images dans ladite séparation audit emplacement discret;
   b) partager les signaux d'intensité de lumière de chaque séparation de matière colorante en créant un plan de signal sans perte et un plan de signal avec perte (12, 14), selon que chaque signal d'intensité de lumière forme une partie d'une courte série d'emplacements discrets et est mieux compressé par une compression avec perte ou forme une partie d'une longue série d'emplacements discrets et est mieux compressé par une compression sans perte respectivement, ladite étape de partage comprenant dans l'ordre établi, les étapes consistant à:

      i) sélectionner un nombre d'emplacements discrets consécutifs dans ladite séparation pour laquelle lesdits signaux ont des valeurs d'intensité de lumière qui se trouvent dans une gamme prédéterminée;
      ii) calculer une valeur moyenne pour lesdites valeurs d'intensité de lumière sélectionnées; et
      iii) remplacer des signaux dans chacun desdits emplacements discrets consécutifs avec ladite valeur d'intensité de lumière moyenne calculée;

   c) générer une carte de sélection (16) qui indique, pour chaque emplacement discret dans chacune desdites séparations, si des signaux d'intensité de lumière précédemment placés dessus ont été placés sur ledit plan de signal sans perte ou sur ledit plan de signal avec perte; et
   d) pour au moins une séparation, compresser séparément lesdits plans de signaux sans perte et lesdits plans de signaux avec perte d'une manière adéquate pour compresser un type de données contenues dessus, où ledit plan de signal avec perte est composé d'un sous-ensemble avec perte de signaux d'intensité de lumière placés dans des emplacements discrets qui correspondent à des emplacements discrets dans lesquels lesdits signaux d'intensité de lumière avec perte résidents dans ladite séparation, et dans lesquels lesdits signaux qui sont présents sur ledit plan de signal avec perte dans des emplacements qui correspondent à des emplacements discrets dans lesquels lesdits signaux d'intensité de lumière résidents dans ladite séparation sont ignorés.

2. Procédé de traitement d'une image tel que revendiqué dans la revendication 1, dans lequel pour au moins une séparation, ladite étape de partage comprend en plus le fait de:

   i) sélectionner un nombre d'emplacements discrets consécutifs dans ladite séparation pour laquelle lesdits signaux ont des amplitudes d'intensité de lumière égales;
   ii) désigner lesdits signaux pour ledit sous-ensemble avec perte lorsque ledit nombre compté de signaux consécutifs est inférieur à une valeur prédéterminée; et

iii) placer des signaux non désignés pour ledit sous-ensemble avec perte dans ledit sous-ensemble sans perte.

3. Procédé de traitement d'une image tel que revendiqué dans la revendication 1, dans lequel pour au moins une séparation, ladite étape de partage comprend de plus le fait de:

i) placer des signaux qui ne sont pas inclus dans ledit sous-ensemble avec perte dans ledit sous-ensemble sans perte; et

ii) pour des signaux désignés pour ledit sous-ensemble avec perte, sélectionner des signaux qui ont des valeurs qui sont soit supérieures à une valeur seuil élevée ou inférieures à une valeur seuil basse, et déplacer lesdits signaux sélectionnés à partir dudit sous-ensemble avec perte vers ledit sous-ensemble sans perte.

4. Appareil de traitement de données d'images numériques qui sont composées d'une pluralité de séparations de matières colorantes superposées, comprenant:

un moyen pour diviser les données d'images en des séparations de matières colorantes (102-108), dans lequel chaque séparation de matière colorante est composée de signaux d'intensité de lumière dans des emplacements discrets, chacun desdits signaux d'intensité de lumière ayant une valeur qui indique une amplitude d'une intensité de lumière des données d'images dans ladite séparation audit emplacement discret;

b) un moyen pour partager les signaux d'intensité de lumière pour chaque séparation de matière colorante en deux plans (12, 14) en créant un plan de signal sans perte et un plan de signal avec perte (12, 14);

c) un moyen pour générer une carte de sélection (16) qui indique, pour chaque emplacement discret dans chacune desdites séparations, si les signaux d'intensité de lumière précédemment placés dessus ont été placés sur ledit plan de signal sans perte ou sur ledit plan de signal avec perte; et

d) pour au moins une séparation, un moyen pour compresser séparément ledit plan de signal sans perte et ledit plan de signal avec perte d'une manière adéquate pour compresser un type de données contenues dessus, **caractérisé en ce que** le moyen de partage, partage les signaux d'intensité de lumière selon le fait que chaque signal d'intensité de lumière forme une partie d'une courte série d'emplacements discrets et est mieux compressé par une compression avec perte ou forme une partie d'une longue série d'emplacements discrets et est mieux compressé par une compression sans perte respectivement, **en ce que** le moyen de partage est adapté de plus pour exécuter les étapes suivantes dans l'ordre établi:

i) sélectionner un nombre d'emplacements discrets consécutifs dans ladite séparation pour laquelle lesdits signaux ont des valeurs d'intensité de lumière qui se trouvent dans une gamme prédéterminée;

ii) calculer une valeur moyenne pour lesdites valeurs d'intensité de lumière sélectionnées; et

iii) remplacer des signaux dans chacun desdits emplacements discrets consécutifs avec ladite valeur d'intensité de lumière moyenne calculée;

et **en ce que** ledit plan de signal avec perte est composé d'un sous-ensemble avec perte de signaux d'intensité de lumière placés dans des emplacements discrets qui correspondent à des emplacements discrets dans lesquels lesdits signaux d'intensité de lumière avec perte résidents dans ladite séparation, et dans lesquels les signaux qui sont présents sur ledit plan de signal avec perte dans des emplacements qui correspondent à des emplacements discrets dans lesquels lesdits signaux d'intensité de lumière sans perte résidents dans ladite séparation sont ignorés.

5. Dispositif de stockage programmable lisible par une machine, et représentant un programme d'instructions définissant les étapes du procédé de traitement de données d'images numériques qui sont composées d'une pluralité de séparations superposées, les étapes du procédé comprenant le fait de:

a) diviser les données d'images en des séparations de matières colorantes (102-108), dans lesquelles chaque séparation de matières colorantes est composée de signaux d'intensité de lumière dans des emplacements discrets, chacun desdits signaux d'intensité de lumière ayant une valeur qui indique une amplitude d'une intensité de lumière des données d'images dans ladite séparation audit emplacement discret;

b) partager les signaux d'intensité de lumière de chaque séparation de matières colorantes en créant un plan de signal sans perte et un plan de signal avec perte (12, 14), selon le fait que chaque signal d'intensité de lumière forme une partie d'une courte série d'emplacements discrets et est mieux compressé par une compression avec perte ou forme une partie d'une longue série d'emplacements discrets et est mieux compressé par une compression sans perte respectivement, ladite étape de partage comprenant dans l'ordre établi, les étapes consistant à:

i) sélectionner un nombre d'emplacements discrets consécutifs dans ladite séparation pour laquelle lesdits signaux ont des valeurs d'intensité de lumière qui se trouvent dans une gamme prédéterminée;

ii) calculer une valeur moyenne pour lesdites valeurs d'intensité de lumière sélectionnées; et

iii) remplacer les signaux dans chacun desdits emplacements discrets consécutifs avec ladite valeur d'intensité de lumière moyenne calculée;

c) générer une carte de sélection (16) qui indique, pour chaque emplacement discret dans chacune desdites séparations, si des signaux d'intensité de lumière précédemment placés dessus ont été placés sur ledit plan de signal sans perte ou sur ledit plan de signal avec perte; et

d) pour au moins une séparation, compresser séparément lesdits plans de signaux sans perte et lesdits plan de signaux avec perte d'une manière adéquate pour compresser un type de données contenues dessus, où ledit plan de signal avec perte est composé d'un sous-ensemble avec perte de signaux d'intensité de lumière placés dans des emplacements discrets qui correspondent à des emplacements discrets dans lesquels lesdits signaux d'intensité de lumière avec perte résidents dans ladite séparation, et où les signaux qui sont présents sur ledit plan de signal avec perte dans des emplacements qui correspondent à des emplacements discrets dans lesquels lesdits signaux d'intensité de lumière sans perte résidents dans ladite séparation sont ignorés.

FIG. 1

FIG. 2

**FIG. 3**

| |
|---|
| DIVIDE IMAGE INTO SEPARATIONS | ⌐310 |

```
┌─────────────────────────────────────────────┐─310
│         DIVIDE IMAGE INTO SEPARATIONS         │
└─────────────────────────────────────────────┘
                      ↓
┌─────────────────────────────────────────────┐─320
│  PARTITION EACH SEPARATION INTO A LOSSLESS DATA │
│        PLANE AND A LOSSY DATA PLANE           │
└─────────────────────────────────────────────┘
                      ↓
┌─────────────────────────────────────────────┐─330
│             GENERATE SELECTOR MAP             │
└─────────────────────────────────────────────┘
                      ↓
┌─────────────────────────────────────────────┐─340
│   SEPARATELY COMPRESS LOSSLESS DATA PLANE     │
│           AND LOSSY DATA PLANE                │
└─────────────────────────────────────────────┘
                      ↓
┌─────────────────────────────────────────────┐─350
│            COMPRESS SELECTOR MAP              │
└─────────────────────────────────────────────┘
```

**FIG. 4**

402

| a | b | c | d |
|---|---|---|---|
| e | f | g | h |
| i | j | k | l |
| m | n | o | p |

16

| 1 | 0 | 1 | 0 |
|---|---|---|---|
| 0 | 1 | 0 | 0 |
| 1 | 1 | 1 | 0 |
| 1 | 0 | 0 | 1 |

222

| a |   | c |   |
|---|---|---|---|
|   | f |   |   |
| i | j | k |   |
| m |   |   | p |

224

| b | d | e | g |
|---|---|---|---|
| h | l | n | o |
|   |   |   |   |
|   |   |   |   |

# FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5778092 A

- US 5778095 A, Davies

**Non-patent literature cited in the description**

- **G. WALLACE.** The JPEG still picture compression standard. *Communications of the ACM,* April 1991, vol. 34 (4), 30-44